# EUROPEAN PATENT APPLICATION

(11) **EP 4 464 975 A1**
(43) Date of publication of application: **20.11.2024**
(21) Application number: 22920222.1
(22) Date of filing: 13.01.2022
(51) Int. Cl.: G01B 5/02, G06T 19/00

(54) **DIMENSION MEASURING METHOD USING AUGMENTED REALITY**

(71) Applicant: Hitachi, Ltd., Tokyo 100-8280 (JP); ARDe Co., Ltd., Tokyo 110-0005 (JP)
(72) Inventor: YANG, Na, Tokyo 100-8280 (JP); TANIDA, Yuta, Tokyo 100-8280 (JP); OHYAMA, Takuma, Tokyo 100-8280 (JP); YAMAGUCHI, Gojiro, Tokyo 110-0005 (JP)
(74) Representative: Mewburn Ellis LLP
(86) International application number: PCT/JP2022/000856
(87) International publication number: WO 2023/135697

(57) **Abstract**

It is an object to provide a method for measuring a dimension by using augmented reality which method makes it possible to promptly guide a gauge to a measurement point and perform a quick and accurate measurement. An augmented reality space is generated by processing a video taken by a camera (93) by a processing unit (97) and displaying the video on a transparent screen (94). In a virtual space, one virtual measurement point (Ib1n) corresponding to one real measurement point (Rbin), another virtual measurement point (Ib2n) corresponding to another real measurement point (Rb2n), a virtual first probe (63a) corresponding to a first probe (53a) in a real space, and a virtual second probe (63b) corresponding to a second probe (53b) in the real space are displayed. The method includes a first step of determining whether the virtual first probe (63a) is in contact with the one virtual measurement point (Ib1n), and a second step of determining whether the virtual second probe (63b) is in contact with the other virtual measurement point (Ib2n).

## Description

### Technical Field

The present invention relates to a method for measuring a dimension by using augmented reality and, in particular, to a method for measuring a dimension by using augmented reality which method includes measuring a dimension between two facing objects or surfaces.

### Background Art

Whether structures such as tunnels and bridges, vessels, aircrafts, and railway vehicle body structures have been constructed or produced on the basis of drawing instructions is confirmed with the measurement of dimensions between two facing objects (surfaces) in some cases. Examples of dimensions between two facing objects (surfaces) include dimensions of railway vehicle body structures (hereinafter referred to as "body structures"). Here, a railway vehicle includes a body structure, a truck configured to support the body structure, interior parts provided inside the body structure, and the like. The interior parts are seats, heat insulating materials, interior materials, lighting devices, luggage racks, and the like.

The body structure is a hexahedron including an underframe forming a floor surface, side body structures erected at respective end portions in the width direction of the underframe, end body structures erected at respective end portions in the longitudinal direction of the underframe, and a roof body structure placed on upper end portions of the side body structures and the end body structures.

Further, Patent Document 1 discloses a technology relating to a railway vehicle measurement method for allowing, in measuring the dimensions of a railway vehicle by using a three-dimensional measuring machine, an operator to identify measurement parts and perform reduced-time measurements with fewer errors, thereby confirming measurement results.

### Prior Art Document

### Patent Document

Patent Document 1: JP-2016-205909-A

### Summary of the Invention

### Problems to be Solved by the Invention

For example, when a body structure that is a hexahedron has not been able to accurately be produced, the operation of mounting interior parts, such as interior materials, seats, and luggage racks, on inner surfaces of the body structure takes time. This is because fine adjustment and alignment operation in terms of mounting dimensions is required after positioning at a manufacturing site. Meanwhile, when a body structure that is a hexahedron has been able to accurately be produced, the number of man-hours of operation for interior parts at the manufacturing site is small, so that a railway vehicle can be produced with a small number of man-hours. Hence, a plurality of cross-sectional dimensions of an assembled body structure, which is a hexahedron, are measured to grasp the degree of difference between the design drawing and the product (body structure). In the measurement here, for example, a height dimension between the roof body structure and the underframe, a horizontal dimension between the pair of side body structures, diagonal dimensions which are obtained by measuring diagonally in a mutually crossing state, and the like in 8 to 12 cross sections intersecting the longitudinal direction of the body structure are measured.

A body structure has similar consecutive cross sections since it has a longitudinal dimension much larger than its width dimension. Therefore, a dimension measurer who is to measure dimensions needs to identify a cross section to be measured while confirming the longitudinal dimension of the body structure and then measure predetermined dimensions in the identified cross section.

Further, for example, a general body structure has, in each cross section, a height dimension of approximately 2.5 m, a width dimension of approximately 3 m, and a diagonal dimension of approximately 3.8 m, which are relatively large dimensions. In order to measure the dimensions with an accuracy in the order of millimeters, a long measurement tool having a length of several meters (hereinafter referred to as a "long gauge") is required.

Moreover, an operator who grasps measurement cross sections by referring to the design drawings and instructs measurement points of each body structure, an operator who measures dimensions with a long gauge, and an operator who records measurement results are required in some cases. Thus, a predetermined number of operators are required for measurements, and a large number of man-hours tend to inevitably be required.

Further, Patent Document 1 is based on the premise of the use of a three-dimensional measuring machine.

The present invention has been made in view of the problems described above and has an object to provide a method for measuring a dimension by using augmented reality which method makes it possible to promptly guide a gauge to a measurement point and perform a quick and accurate measurement.

### Means for Solving the Problems

In order to achieve the object described above, a representative dimension measurement method according to the present invention is a method for measuring a dimension by using an augmented reality space generated by superimposing a virtual space on a real space. The augmented reality space is generated by processing a video taken by a camera by a processing unit and displaying the video on a transparent screen. The dimension is measured by measuring a distance between one real measurement point and another real measurement point by using a gauge including a first probe that is brought into abutment against the one real measurement point and a second probe that is brought into abutment against the other real measurement point. In the virtual space, one virtual measurement point corresponding to the one real measurement point, another virtual measurement point corresponding to the other real measurement point, a virtual first probe corresponding to the first probe in the real space, and a virtual second probe corresponding to the second probe in the real space are displayed. The method includes a first step of determining whether the virtual first probe is in contact with the one virtual measurement point and a second step of determining whether the virtual second probe is in contact with the other virtual measurement point.

### Advantages of the Invention

According to the present invention, in the method for measuring a dimension by using augmented reality, the gauge can promptly be guided to a measurement point and a quick and accurate measurement can be performed.

Problems, configurations, and effects other than the above will become apparent from the following embodiments.

### Brief Description of the Drawings

FIG. 1 is a block diagram illustrating a computer system for implementing an aspect according to an embodiment of the present disclosure.
FIG. 2 illustrates exemplary measurement parts to which the method for measuring a dimension by using augmented reality according to the present invention is applied, and is a side view of a railway vehicle body structure illustrating respective measurement cross section positions.
FIG. 3 illustrates exemplary measurement parts to which the method for measuring a dimension by using augmented reality according to the present invention is applied, and is a sectional view intersecting the longitudinal direction of the railway vehicle body structure at a right angle (the sectional view of any one of A to K of FIG. 2) to illustrate measurement points in each measurement cross section of FIG. 2.
FIG. 4 is a configuration diagram illustrating an exemplary dimension measurement system that is used in the method for measuring a dimension by using augmented reality according to the present invention.
FIG. 5 is a schematic diagram illustrating an exemplary long gauge that is used in the method for measuring a dimension by using augmented reality according to the present invention.
FIG. 6 is a schematic diagram illustrating exemplary virtual probes at respective end portions of a long gauge generated in a virtual space in the method for measuring a dimension by using augmented reality according to the present invention.
FIG. 7 is a schematic diagram illustrating exemplary measurement points in a cross section in a virtual space in the method for measuring a dimension by using augmented reality according to the present invention.
FIG. 8 is a diagram schematically illustrating an exemplary measurement cross section and exemplary positions of respective measurement points in an augmented reality space generated by the dimension measurement system in the method for measuring a dimension by using augmented reality according to the present invention.
FIG. 9 is an exemplary table of records in the method for measuring a dimension by using augmented reality according to the present invention.
FIG. 10 depicts schematic diagrams illustrating an exemplary method for guiding the position of a measurement point in the method for measuring a dimension by using augmented reality according to the present invention.
FIG. 11 is a flowchart (first part) illustrating an exemplary method for measuring a dimension by using augmented reality according to the present invention.
FIG. 12 is a flowchart (second part) illustrating the exemplary method for measuring a dimension by using augmented reality according to the present invention.
FIG. 13 is a flowchart (third part) illustrating the exemplary method for measuring a dimension by using augmented reality according to the present invention.
FIG. 14 is a flowchart (fourth part) illustrating the exemplary method for measuring a dimension by using augmented reality according to the present invention.

### Modes for Carrying Out the Invention

Modes for carrying out the present invention are described.

### <Computer System for Implementing Aspect According to Embodiment>

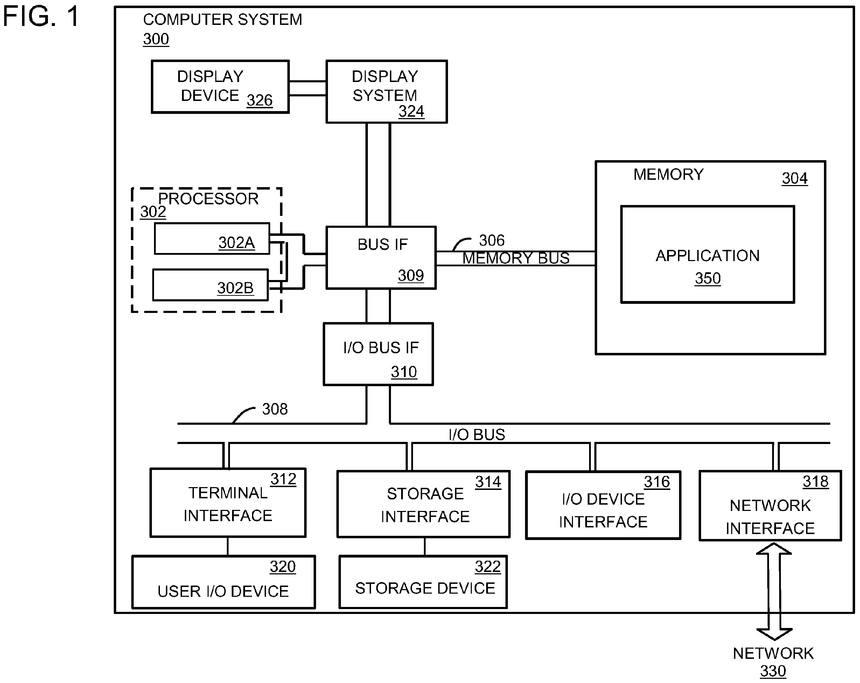

FIG. 1 is a block diagram illustrating a computer system 300 for implementing an aspect according to an embodiment of the present disclosure. Mechanisms and devices of various embodiments disclosed herein may be applied to any appropriate computing system. The main components of the computer system 300 include one or more processors 302, a memory 304, a terminal interface 312, a storage interface 314, an I/O (input/output) device interface 316, and a network interface 318. These components may be connected to one another through a memory bus 306, an I/O bus 308, a bus interface unit 309, and an I/O bus interface unit 310.

The computer system 300 may include one or a plurality of processing devices 302A and 302B that are collectively referred to as the "processor 302." Each of the processors 302 may execute commands stored in the memory 304 and include an on-board cache. In certain embodiments, the computer system 300 may include a plurality of processors. In other embodiments, the computer system 300 may be a system including a single processing device. As the processing device, a CPU (Central Processing Unit), an FPGA (Field-Programmable Gate Array), a GPU (Graphics Processing Unit), a DSP (Digital Signal Processor), or the like can be applied.

In certain embodiments, the memory 304 may include a random-access semiconductor memory, a storage device, or a storage medium (either volatile or non-volatile) for storing data and programs. In certain embodiments, the memory 304 represents an entire virtual memory of the computer system 300 and may include a virtual memory of another computer system connected to the computer system 300 via a network. The memory 304 can conceptually be regarded as a single monolithic entity, but in other embodiments, the memory 304 is a more complex arrangement, such as a hierarchy of caches and other memory devices. For example, the memory may exist in a plurality of levels of caches, and these caches may be divided by function. As a result, one cache may hold commands while another cache may hold non-command data to be used by the processor. The memory may be distributed and associated with various different processing devices, like what is generally called NUMA (Non-Uniform Memory Access) computer architectures.

The memory 304 may store all or a portion of programs, modules, and data structures for implementing functions described herein. For example, the memory 304 may store a latent factor identification application 350. In certain embodiments, the latent factor identification application 350 may include commands or statements for executing the functions described below on the processor 302 or commands or statements that are interpreted by other commands or statements. In certain embodiments, the latent factor identification application 350 may be implemented in hardware via semiconductor devices, chips, logical gates, circuits, circuit cards, and/or other physical hardware devices, in lieu of or in addition to a processor-based system. In certain embodiments, the latent factor identification application 350 may include data other than commands or statements. In certain embodiments, a camera, a sensor, or other data input devices (not illustrated) may be provided in direct communication with the bus interface unit 309, the processor 302, or other hardware of the computer system 300. In such a configuration, the need for the processor 302 to access the memory 304 and the latent factor identification application may be reduced.

The computer system 300 may include the bus interface unit 309 configured to handle communications among the processor 302, the memory 304, a display system 324, and the I/O bus interface unit 310. The I/O bus interface unit 310 may be coupled with the I/O bus 308 for transferring data to and from the various I/O units. The I/O bus interface unit 310 may communicate with the plurality of I/O interface units 312, 314, 316, and 318, which are also known as I/O processors (IOPs) or I/O adapters (IOAs), through the I/O bus 308. The display system 324 may include a display controller, a display memory, or both. The display controller can provide video, audio, or both types of data to a display device 326. Further, the computer system 300 may include one or a plurality of sensors or other devices configured to collect data and provide the data in question to the processor 302. For example, the computer system 300 may include environmental sensors configured to collect, for example, humidity data, temperature data, and pressure data, motion sensors configured to collect, for example, acceleration data and movement data, or the like. Other types of sensors can also be used. The display memory may be a dedicated memory for buffering video data. The display system 324 may be connected to the display device 326 such as a standalone display screen, a television, a tablet, or a portable device. In certain embodiments, the display device 326 may include a speaker for rendering audio. Alternatively, the speaker for rendering audio may be connected to the I/O interface units. In other embodiments, the functions provided by the display system 324 may be on board an integrated circuit including the processor 302. Similarly, the functions provided by the bus interface unit 309 may be on board an integrated circuit including the processor 302.

The I/O interface units have a function of communicating with various storages or I/O devices. For example, the terminal interface unit 312 supports the attachment of a user I/O device 320, examples of which include user output devices, such as video display devices, speakers, and televisions, and user input devices, such as keyboards, mice, keypads, touchpads, trackballs, buttons, light pens, and other pointing devices. A user may manipulate a user input device by using a user interface in order to provide input data and instructions to the user I/O device 320 and the computer system 300 and receive output data from the computer system 300. For example, a user interface may be presented via the user I/O device 320, such as displayed on a display device, reproduced via a speaker, or printed via a printer.

The storage interface 314 supports the attachment of one or a plurality of disk drives or direct access storage devices 322 (that are typically magnetic disk drive storage devices but may be arrays of disk drives configured to appear as a single disk drive or other storage devices). In certain embodiments, the storage device 322 may be implemented as any type of secondary storage device. The contents of the memory 304 may be stored in the storage device 322 and retrieved from the storage device 322 as needed. The network interface 318 may provide a communication path for allowing the computer system 300 to communicate with other devices. The communication path may be, for example, a network 330.

Although the computer system 300 illustrated in FIG. 1 has a bus structure providing a direct communication path among the processor 302, the memory 304, the bus interface 309, the display system 324, and the I/O bus interface unit 310, in other embodiments, the computer system 300 may include a communication path which may be arranged in any of various forms such as point-to-point links in hierarchical, star, or web configurations, a plurality of hierarchical buses, or parallel or redundant paths. Moreover, while the I/O bus interface unit 310 and the I/O bus 308 are each illustrated as a single unit, the computer system 300 may practically include a plurality of I/O bus interface units 310 or a plurality of I/O buses 308. Further, while the plurality of I/O interface units for separating the I/O bus 308 from various communication paths running to the various I/O devices are illustrated, in other embodiments, some or all of the I/O devices may be connected directly to one system I/O bus.

In certain embodiments, the computer system 300 may be a multi-user mainframe computer system, a single-user system, or a device such as a server computer that has no direct user interface but receives requests from other computer systems (clients). In other embodiments, the computer system 300 may be a desktop computer, a portable computer, a laptop, a tablet computer, a pocket computer, a telephone, a smartphone, or any other suitable type of electronic device.

### <Method for Measuring Dimension by Using Augmented Reality>

Application examples of the method for measuring a dimension by using augmented reality according to the present invention include dimensions between two facing objects (surfaces) of, for example, structures such as tunnels and bridges, vessels, aircrafts, and railway vehicle body structures. Now, modes for carrying out the present invention are described by taking the measurement of dimensions of a railway vehicle body structure as an example.

First, each direction is defined. The longitudinal direction of the railway vehicle body structure is defined as an x direction, the width direction of the railway vehicle body structure is defined as a y direction, and the height direction of the railway vehicle body structure is defined as a z direction. The directions are hereinafter sometimes referred to simply as an "x direction," a "y direction," and a "z direction."

Augmented reality is a technology that superimposes, on a real space perceived by humans or cameras, a virtual space constructed by a technology such as 3D CAD (three-dimensional computer-aided design) data or CG (Computer Graphics) composed by servers (computers), to thereby extend the space perceived by the humans (augmented reality space).

The "real space" herein means a space in which images perceived by an operator by his/her visual perception or images taken by a camera 93 are placed. Further, the "virtual space" herein means a space constructed with digital information such as 3D CAD or CG in a server (computer). In the respective drawings and the present specification, the prefix "R" of each reference symbol means "real space" and the prefix "I" of each reference symbol means "virtual space" in some cases. Further, herein, as a matter of convenience, the names of articles in a real space are affixed with "real" and the names of articles in a virtual space are affixed with "virtual" in some cases. Further, when a real space and a virtual space "correspond to each other," unless otherwise specified, positions in the respective spaces correspond to each other.

### <Measurement of Dimensions of Railway Vehicle Body Structure>

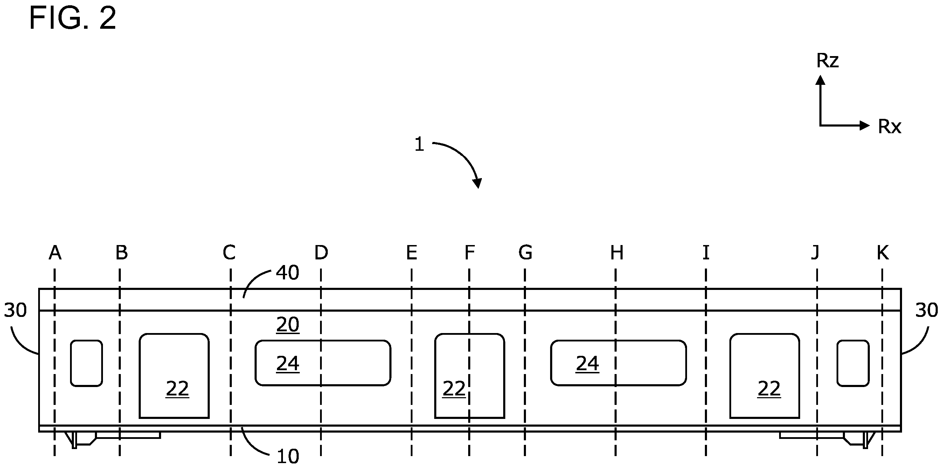

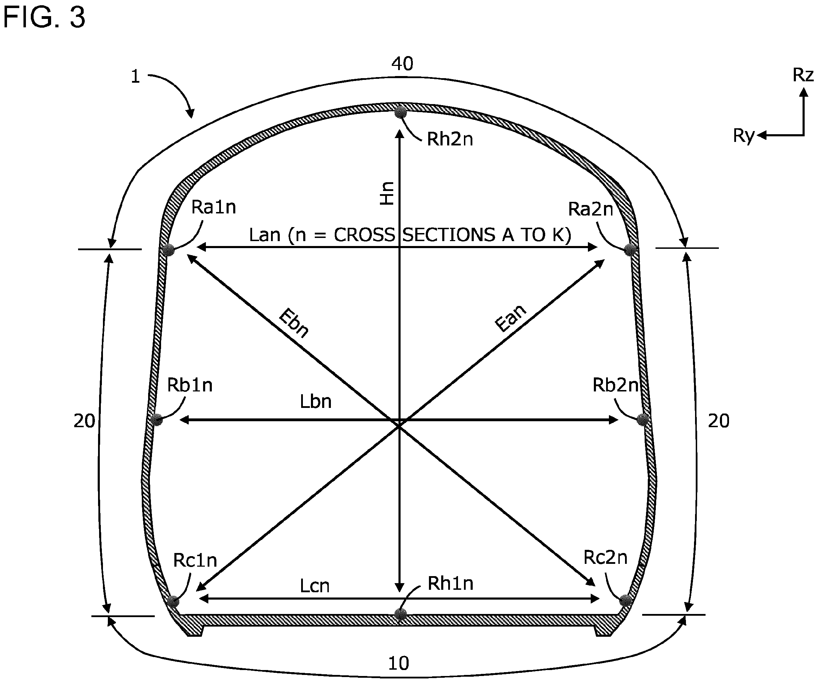

FIG. 2 illustrates exemplary measurement parts to which the method for measuring a dimension by using augmented reality according to the present invention is applied, and is a side view of a railway vehicle body structure illustrating respective measurement cross section positions. FIG. 3 illustrates exemplary measurement parts to which the method for measuring a dimension by using augmented reality according to the present invention is applied, and is a sectional view intersecting the longitudinal direction of the railway vehicle body structure at a right angle to illustrate measurement points in each measurement cross section of FIG. 2. Here, the sectional view of any of measurement cross section positions A to K of FIG. 2 is illustrated.

A railway vehicle body structure 1 (hereinafter referred to as a "body structure 1") includes an underframe 10 forming a floor surface, side body structures 20 erected at respective end portions in the y direction of the underframe 10, end body structures 30 erected at respective end portions in the x direction of the underframe 10, and a roof body structure 40 placed on upper end portions of the side body structures 20 and the end body structures 30. The side body structures 20 each have openings such as windows 24 and doors 22 that allow passengers or the like to get on and off the body structure 1.

Inside dimensions of the body structure 1 to be measured are inside dimensions in a cross section intersecting the x direction of the body structure 1 at a right angle. For example, the measurement of a total of six dimensions as illustrated in FIG. 3 is planned in each of the 11 cross sections from the cross section A to the cross section K of FIG. 2.

### (Measurement in Horizontal Direction)

As illustrated in FIG. 3, three horizontal dimensions, namely, upper, middle, and lower horizontal dimensions (Lan, Lbn, and Lcn), are defined between three first measurement points (Rain, Rbin, and Rein) distributed in the height direction of an inner surface plate of one of the side body structures 20 and three second measurement points (Ra2n, Rb2n, and Rc2n) distributed in the height direction of an inner surface plate of the other side body structure 20.

The dimension along the y direction (horizontal direction) between the first measurement point Rain and the second measurement point Ra2n in the upper portions of the pair of side body structures 20 is the upper horizontal dimension Lan. The dimension along the y direction (horizontal direction) between the first measurement point Rb1n and the second measurement point Rb2n in the middle portions is the middle horizontal dimension Lbn. The dimension along the y direction (horizontal direction) between the first measurement point Rein and the second measurement point Rc2n in the lower portions is the lower horizontal dimension Lcn. The suffix "n" of each measurement point and each dimension indicates the corresponding one of the cross sections A to K (n = cross sections A to K). For example, Rain in the cross section B is a cross section Ra1B. The same holds true for each measurement point and each dimension described below.

### (Measurement in Diagonal Directions)

Moreover, as illustrated in FIG. 3, two diagonal dimensions are defined between the respective measurement points (Rain and Rein) in the upper and lower portions of the inner surface plate of one of the side body structures 20 and the respective measurement points (Ra2n and Rc2n) in the upper and lower portions of the inner surface plate of the other side body structure 20.

The diagonal dimension between the first measurement point Rain in the upper portion of one of the side body structures 20 and the second measurement point Rc2n in the lower portion of the other side body structure 20 (the dimension of the diagonal downward to the right as the body structure 1 is viewed in the x direction) is a diagonal dimension Ebn. The diagonal dimension between the first measurement point Rein in the lower portion of one of the side body structures 20 and the second measurement point Ra2n in the upper portion of the other side body structure 20 (the dimension of the diagonal upward to the right as the body structure 1 is viewed in the x direction) is a diagonal dimension Ean.

### (Measurement in Height Direction)

Moreover, as illustrated in FIG. 3, a height (vertical) dimension Hn between a first measurement point Rh1n on a portion of an inner surface plate located in a central portion in the y direction of the underframe 10 and a second measurement point Rh2n on a portion of an inner surface plate located in a central portion in the y direction of the roof body structure 40 is defined as a dimension to be measured.

### <System Configuration>

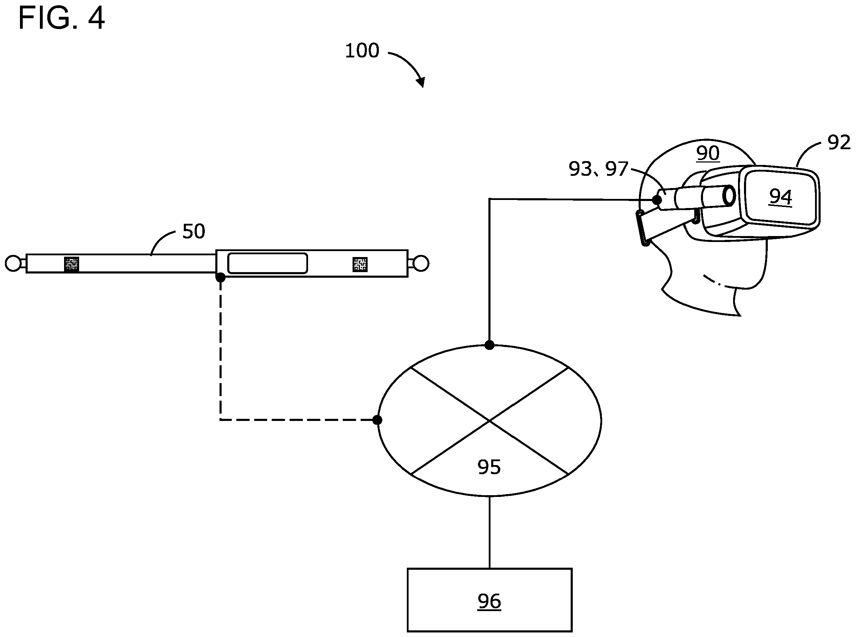

FIG. 4 is a configuration diagram illustrating an exemplary dimension measurement system that is used in the method for measuring a dimension by using augmented reality according to the present invention.

A dimension measurement system 100 illustrated in FIG. 4 includes a wearable device 92, a long gauge 50, a network server 96, and a network 95. The wearable device 92 is a device that an operator wears. The long gauge 50 is a long gauge that is configured to display measured dimensions and that has a communication function (transmission unit) of transmitting information on measured dimensions. The network server 96 is a server that is connected to the network and that includes a recording unit having stored therein library information such as 3D CAD data including dimension measurement points of the body structure 1 or the like and operation procedures. The network 95 is a network to which various devices and measurement devices, such as the wearable device 92, the long gauge 50, and the network server 96, are connected. Now, details of the respective constituent elements are described below.

### (Wearable Device)

The wearable device 92 is a device that an operator 90 who is to measure dimensions wears. The wearable device 92 that is a device that the operator 90 wears on his/her head, for example, is called a "headgear" or the like. In this case, the operator 90 wears the wearable device 92 on his/her head with a belt or the like such that both hands of the operator 90 are free. The wearable device 92 includes the camera 93, an augmented reality server 97, and a transparent screen 94. In the example illustrated in FIG. 4, the augmented reality server 97 is integrated with the camera 93.

The camera 93 can acquire a video from the point of view of the operator 90 to acquire an image that is almost the same as an image that the operator 90 perceives by his/her visual perception through the transparent screen 94. Thus, the camera 93 is provided at a position near the point of view of the operator 90, such as in the vicinity of the transparent screen 94. The camera 93 can employ the configuration of a camera configured to form an image on an imaging element with incident light through lenses and a diaphragm, thereby obtaining information. Examples of the imaging element here include CCD (Charge-Coupled Device) image sensors and CMOS (Complementary Metal Oxide Semiconductor) image sensors. The camera 93 takes videos at 20 frames per second (20 fps) or more, for example.

The augmented reality server 97 has functions of performing image processing on images or the like taken by the camera 93 and communicating with the network 95. The augmented reality server 97 has a function of projecting, on the transparent screen 94, a video of an augmented reality space generated by superimposing a video of a virtual space acquired by the augmented reality server 97 from the network server 96 via the network 95 on a video of a real space acquired by the camera 93. Thus, the augmented reality server 97 includes devices required for these processes. The augmented reality server 97 is a computer including a memory region (recording unit) configured to store application software and various types of data for creating augmented reality, a processing unit configured to process requests issued by the operator 90 through the wearable device 92, and a communication unit configured to transmit or receive data to or from the network 95.

The transparent screen 94 forms a field of vision of the operator 90 and is transparent enough to allow the operator 90 to view the real space through the transparent screen 94. The transparent screen 94 is disposed in front of the field of vision of the operator 90.

The function of the augmented reality server 97 is not distinguished clearly from the function of the network server 96. Thus, when the augmented reality server 97 and the network server 96 are connected to the network 95, the augmented reality server 97 and the network server 96 can substitute for each other in terms of function. Thus, the network server 96 may include a recording unit, a processing unit, a communication unit, and the like as needed, like the augmented reality server 97. Accordingly, in the following description, the term "augmented reality server 97" means any of the augmented reality server 97 and the network server 96. Note that, the augmented reality server 97 and the network server 96 can each employ the computer system 300 of FIG. 1, for example.

### (Long Gauge)

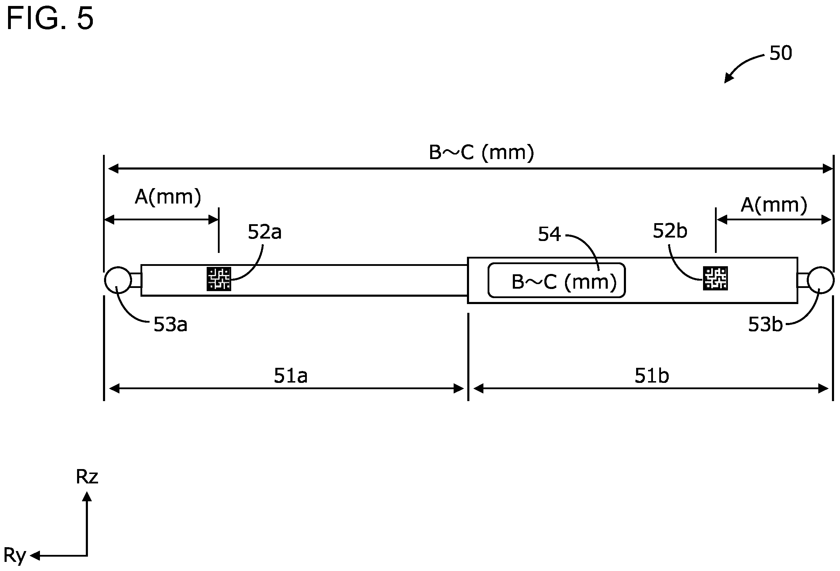

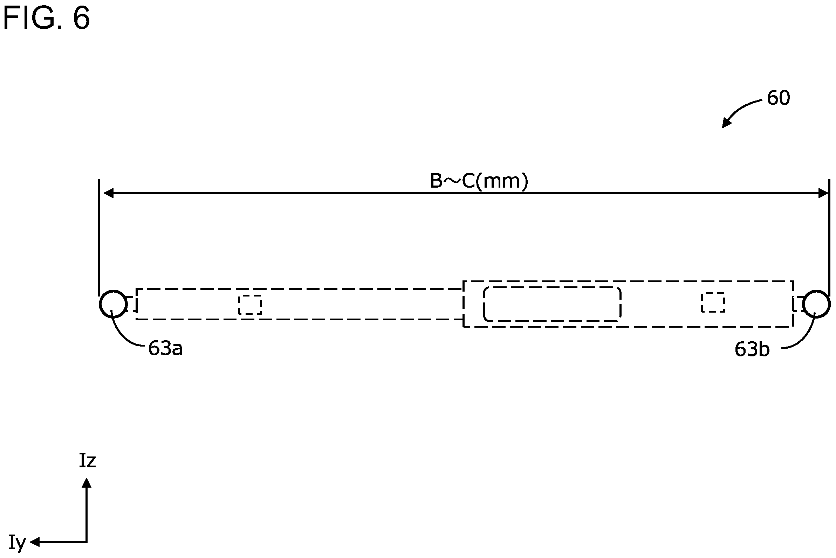

FIG. 5 is a schematic diagram illustrating an exemplary long gauge that is used in the method for measuring a dimension by using augmented reality according to the present invention. FIG. 6 is a schematic diagram illustrating exemplary virtual probes at respective end portions of a long gauge generated in a virtual space in the method for measuring a dimension by using augmented reality according to the present invention.

The long gauge 50 configured to measure the dimensions of the body structure 1 includes a cylindrical first gauge portion 51a and a cylindrical second gauge portion 51b. The first gauge portion 51a and the second gauge portion 51b are combined to a telescopic in series to be stretchable along their axial (longitudinal) directions. With this, the full length of the long gauge 50 (a dimension from an end portion of a first probe 53a to an end portion of a second probe 53b) can be changed in the axial direction of the long gauge 50 in a range of B mm to C mm. The second gauge portion 51b includes a display unit 54. Dimension information that the display unit 54 displays is dimension information on the full length of the long gauge 50. At this time, the display unit 54 displays dimension information following a change in the range of B to C (mm) in real time.

The first gauge portion 51a includes, at one end portion thereof, the first probe 53a that is brought into abutment against a measurement point. The first probe 53a has, for example, a spherical distal end. Further, a first marker portion 52a is attached at a position away from the first probe 53a by a predetermined dimension A (mm) on a surface of the first gauge portion 51a.

Similarly, the second gauge portion 51b includes, at one end portion thereof, the second probe 53b that is brought into abutment against a measurement point. The second probe 53b has, for example, a spherical distal end. Further, a second marker portion 52b is attached at a position away from the second probe 53b by the predetermined dimension A (mm) on a surface of the second gauge portion 51b.

With such a configuration, the long gauge 50 includes the first probe 53a at one end and the second probe 53b at the other end. Further, the first marker portion 52a and the second marker portion 52b have patterns identifiable by the camera 93. For example, when the augmented reality server 97 or the like has information on the patterns, more reliable identification is achieved.

When the camera 93 of the wearable device 92 recognizes the first marker portion 52a, the augmented reality server 97 analyzes the information held by the first marker portion 52a to generate, in a virtual space corresponding to the position away from the first marker portion 52a by A (mm) on the axis of the long gauge 50, a virtual first probe 63a corresponding to the first probe 53a.

When the camera 93 of the wearable device 92 recognizes the second marker portion 52b, the augmented reality server 97 analyzes the information held by the second marker portion 52b to generate, in a virtual space corresponding to the position away from the second marker portion 52b by A (mm) on the axis of the long gauge 50, a virtual second probe 63b corresponding to the second probe 53b.

The dimension B to C (mm) from the first probe 53a to the second probe 53b of the long gauge 50 in the real space corresponds to the dimension B to C (mm) from the virtual first probe 63a to the virtual second probe 63b of a virtual long gauge 60 in the virtual space on a one-to-one basis.

That is, the transparent screen 94 displays the virtual first probe 63a and the virtual second probe 63b corresponding to the first probe 53a and the second probe 53b of the long gauge 50 in the real space. At this time, the virtual first probe 63a and the virtual second probe 63b are displayed, for example, in a striking color to be easy to find, thereby making it possible to accurately grasp the positions of the first probe 53a and the second probe 53b of the long gauge 50. Note that, the first probe 53a and the second probe 53b in the real space are hereinafter sometimes referred to as a "real first probe 53a" and a "real second probe 53b."

Here, the upper horizontal dimension Lan, the middle horizontal dimension Lbn, the lower horizontal dimension Lcn, the diagonal dimensions Ean and Ebn, and the height dimension Hn of the body structure 1, which are illustrated in FIG. 3, are relatively largely different from one another in length. Here, three types of long gauges, namely, a first long gauge configured to measure horizontal dimensions, a second long gauge configured to measure diagonal dimensions, and a third long gauge configured to measure height dimensions, may be prepared. Then, only horizontal dimensions in each cross section may be measured by the first long gauge, diagonal dimensions in each cross section may be measured by the second long gauge next, and height dimensions in each cross section may be measured by the third long gauge lastly.

With this method, with the first probe 53a of the long gauge in abutment against one of measurement points of the body structure 1, the long gauge is stretched to bring the second probe 53b of the long gauge into abutment against the other measurement point of the body structure 1. On this occasion, for example, the virtual first probe 63a is displayed, so that the first probe 53a can be prevented from being deviated from the measurement point. In this way, the whole measurement time can be shortened.

### <Method for Guiding Dimension Measurement to Operator>

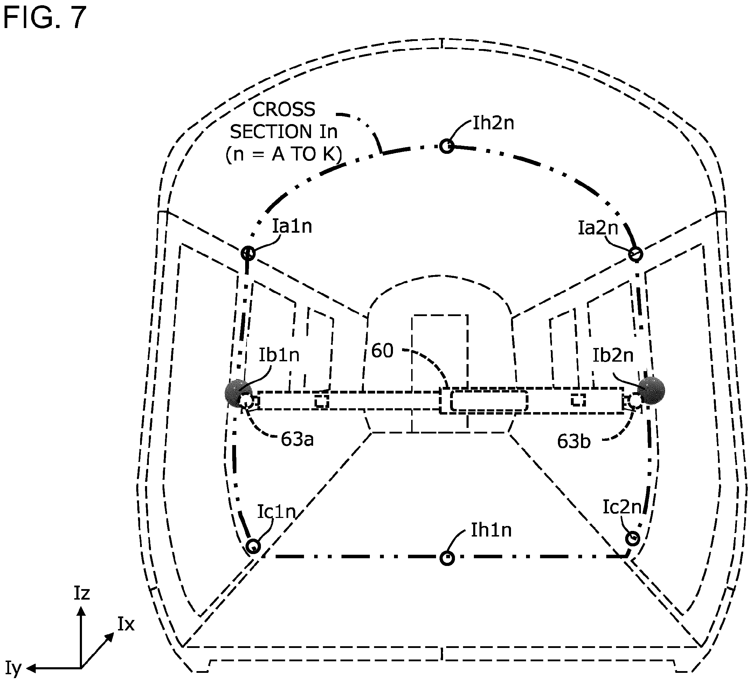

FIG. 7 is a schematic diagram illustrating exemplary measurement points in a cross section in a virtual space in the method for measuring a dimension by using augmented reality according to the present invention.

The 3D CAD of a virtual space stored in the network server 96 includes, in advance, position information on measurement cross sections in which the dimensions of the body structure 1 are to be measured and position information on virtual measurement points in each measurement cross section. FIG. 7 illustrates examples of these pieces of information included in 3D CAD information on the virtual space. Position information on a measurement cross section indicates a cross section In (n = A to K) in the virtual space illustrated in FIG. 7, and the cross sections here are cross sections corresponding to the respective positions of FIG. 2. Further, virtual measurement points are (virtual first measurement points) Ia1n, Ib1n, 1c1n, and Ihin and (virtual second measurement points) Ia2n, Ib2n, Ic2n, and Ih2n in each cross section. These correspond to the respective measurement points (real first measurement points) Rain, Rbin, Rein, and Rh1n and (real second measurement points) Ra2n, Rb2n, Rc2n, and Rh2n in the real space of FIG. 3.

The augmented reality server 97 generates information on the body structure 1 in an augmented reality space, which has information on the body structure 1 in the real space and information on the body structure 1 in the virtual space superimposed thereon, and projects the generated information on the transparent screen 94. Thus, in the augmented reality space visually recognized by the operator 90, position information on a virtual measurement cross section and a virtual measurement point (for example, Ib1n) in the virtual space corresponds to position information on a real measurement cross section of the body structure 1 in the real space and a measurement point (for example, Rb1n) in the real space, on a one-to-one basis.

Further, the augmented reality server 97 may notify the operator 90 of information on measurement points to be measured, on the basis of a dimension measurement order determined in advance. Specifically, the augmented reality server 97 selects position information on a measurement cross section to be measured next and position information on a virtual measurement point (for example, Ib1n) belonging to the measurement cross section (cross section In). Then, the augmented reality server 97 projects the information on the virtual measurement point on the transparent screen 94 to display the information. This allows the operator 90 to know the information on the measurement point to be measured next.

### (Dimension Measurement Procedure When Dimension Measurement System Is Not Used)

A measurement procedure when the dimension measurement system 100 is not used is described. The operator 90 first measures dimensions from the end body structure 30 to measurement cross sections n (n = respective measurement points A to K) to be measured, by referring to the design drawing, to thereby identify the measurement cross section n to be measured. After that, the operator 90 identifies, by referring to the design drawing, the positions of a total of eight measurement points in each of the measurement cross sections n and marks the positions of the measurement points on the inner surface plates of the body structure 1.

Then, for example, a case where the measurement point Rb1n and the measurement point Rb2n of FIG. 3 are marked as measurement points is described. In this case, the first probe 53a of the long gauge 50 is brought into abutment against the measurement point Rbin, and the second probe 53b of the long gauge 50 is brought into abutment against the measurement point Rb2n while adjusting the full length of the long gauge 50. Then, a measurer reads out each measurement value displayed on the display unit 54 of the long gauge 50, and a recorder records the read numerical values.

Since having the dimension in the x direction larger than the dimensions in the y direction and the z direction, the body structure 1 has the substantially similar measurement cross sections n along the x direction in a discrete manner. Thus, there is a risk that the operator 90 mixes up measured measurement points and measurement points to be measured in a measurement cross section. Moreover, checking or the like for avoiding errors in recording the value of each measured dimension requires a lot of man-hours. Further, when an error occurs, the error is possibly difficult to notice.

### (Dimension Measurement Procedure When Dimension Measurement System Is Used)

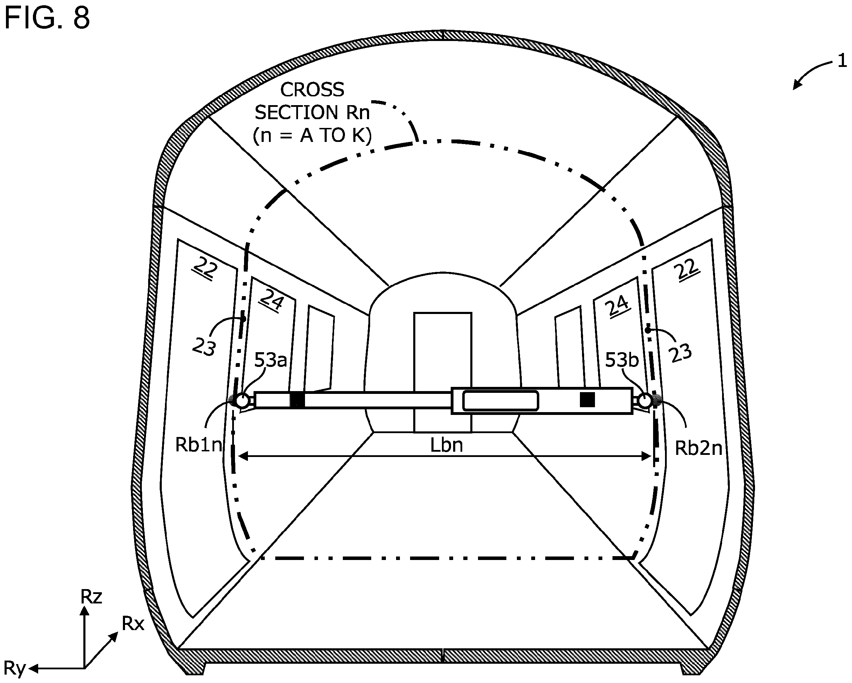

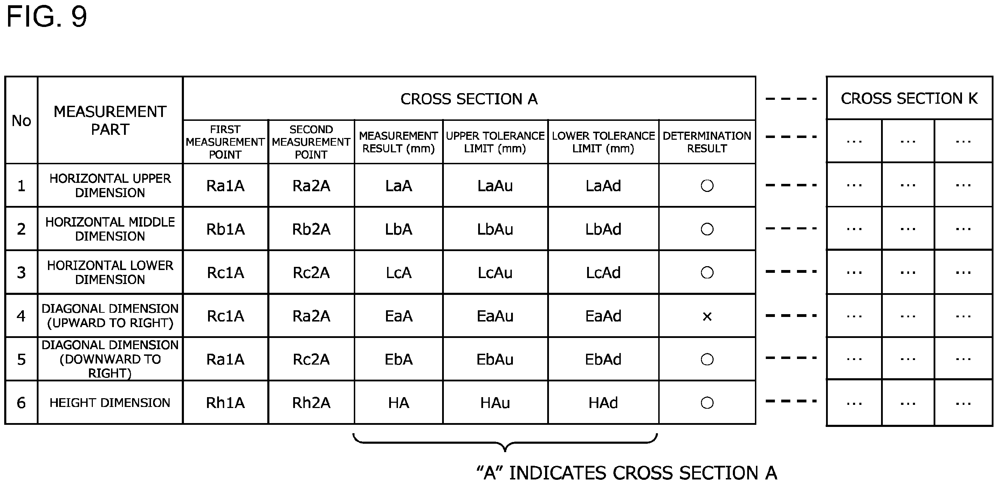

FIG. 8 is a diagram schematically illustrating an exemplary measurement cross section and exemplary positions of respective measurement points in an augmented reality space generated by the dimension measurement system 100 in the method for measuring a dimension by using augmented reality according to the present invention. FIG. 9 is an exemplary table of records in the method for measuring a dimension by using augmented reality according to the present invention. A dimension measurement procedure using the dimension measurement system 100 is described with reference to FIG. 8 and FIG. 9.

The operator 90 activates the dimension measurement system 100 and wears the wearable device 92. The operator 90 visually recognizes, by the camera 93 of the wearable device 92, the body structure 1 whose dimensions are to be measured. Information on the body structure 1 in the real space recognized by the camera 93 is transferred to the augmented reality server 97. The augmented reality server 97 checks the transferred information on the body structure 1 in the real space against the library information stored in the network server 96 in advance. Then, the augmented reality server 97 acquires information (3D CAD data) on the body structure 1 in a virtual space corresponding to the information on the body structure 1 in the real space.

The augmented reality server 97 generates information on the body structure 1 in an augmented reality space having the information on the body structure 1 in the real space and the information on the body structure 1 in the virtual space superimposed thereon and projects the generated information on the transparent screen 94.

The augmented reality server 97 may extract, from the information on the body structure 1 in the real space, feature portions such as window frames of the windows 24 or edge portions of the doors 22 and check the extracted feature portions against feature portions in the information on the body structure 1 in the virtual space, thereby generating the body structure 1 in an augmented reality space.

Further, the body structure 1 in the real space may include a real fiducial marker, and the information on the body structure 1 in the virtual space may include information on a virtual fiducial marker corresponding to the real fiducial marker. After the camera 93 has acquired the real fiducial marker in the real space, the augmented reality server 97 acquires the information on the virtual fiducial marker in the virtual space and checks the virtual fiducial marker against the real fiducial marker. With this, the augmented reality server 97 can generate the body structure 1 in a more accurate augmented reality space in which the real fiducial marker is matched with the virtual fiducial marker.

In the example illustrated in FIG. 8, the operator 90 grasps, from the video projected on the transparent screen 94, that the measurement of the middle horizontal dimension Lbn, which connects the real first measurement point Rb1n to the real second measurement point Rb2n, has been prompted. When the operator 90 visually recognizes the long gauge 50 by the camera 93, the augmented reality server 97 generates, from the first marker portion 52a of the long gauge 50, the virtual first probe 63a, which corresponds to the real first probe 53a in the real space, in the virtual space. Moreover, the augmented reality server 97 generates, from the real second marker portion 52b of the long gauge 50, the virtual second probe 63b, which corresponds to the real second probe 53b in the real space, in the virtual space.

When the operator 90 brings the real first probe 53a of the long gauge 50 into abutment against the real first measurement point Rbin, the augmented reality server 97 detects a state that the virtual first probe 63a is in contact with the virtual first measurement point Ibin in the virtual space, on the basis of the position information and the like. The operator 90 is notified of information on this contact detection through the transparent screen 94. Here, for example, the information is notified by changing the color or size of the displayed sphere indicating the virtual first measurement point Ib1n, or is notified as audio information.

Subsequently, when the operator 90 brings the second probe 53b of the long gauge 50 into abutment against the real second measurement point Rb2n, the augmented reality server 97 detects a state that the virtual second probe 63b is in contact with the virtual second measurement point Ib2n in the virtual space, on the basis of the position information and the like. The operator 90 is notified of information on this contact detection through the transparent screen 94. Here, for example, the information is notified by changing the color or size of the displayed sphere indicating the virtual second measurement point Ib2n, or is notified as audio information.

In this way, the operator 90 brings the real first probe 53a of the long gauge 50 into abutment against the real first measurement point Rb1n and brings the real second probe 53b of the long gauge 50 into abutment against the real second measurement point Rb2n. At the same time, the augmented reality server 97 detects a state that the virtual first probe 63a is in contact with the virtual first measurement point Ibin and the virtual second probe 63b is in contact with the virtual second measurement point Ib2n. With this, it is recognized that a dimension between the correctly selected two real measurement points (Rb1n and Rb2n) is to be correctly measured.

The operator 90 acquires, by the camera 93, a measurement value displayed on the display unit 54 of the long gauge 50 at this time. The augmented reality server 97 quantifies, by image analysis, the measurement value acquired by the camera 93 and then stores the quantified measurement value in the table of records (FIG. 9) prepared in the virtual space in advance. Further, when having a communication function, the long gauge 50 may transmit data on measured dimensions and store the dimension data in the table of records (FIG. 9) stored in the memory region or the like of the augmented reality server 97.

Alternatively, a switch may be provided on a portion of the long gauge 50 that the operator 90 holds. When recognizing the success of a measurement through the transparent screen 94, the operator 90 may operate the switch to transfer data on the dimension (measurement value) measured by the long gauge 50 at this time to the augmented reality server 97.

The augmented reality server 97 determines whether or not the stored measurement value falls within a range of an upper tolerance limit to a lower tolerance limit and records the result of the determination in the table of records (FIG. 9).

FIG. 9 is the table of records of measurement points (first measurement point and second measurement point), a measurement result (mm), an upper tolerance limit (mm), a lower tolerance limit (mm), and a determination result with regard to respective measurement parts (horizontal upper dimension, horizontal middle dimension, horizontal lower dimension, diagonal dimension (upward to the right), diagonal dimension (downward to the right), and height dimension). As a measurement result, an upper tolerance limit, and a lower tolerance limit, dimension values (mm) are practically input. A measurement result is the result of a measurement performed in the procedure described above. An upper tolerance limit and a lower tolerance limit can be determined in advance. As a determination result, pass ("o") is input when a measurement result is between the upper tolerance limit and the lower tolerance limit, and fail ("×") is input when a measurement result is not between the upper tolerance limit and the lower tolerance limit. FIG. 9 illustrates the records related to the cross section A, and measurement results for the other cross sections are also input.

### <Guiding Method to Measurement Point>

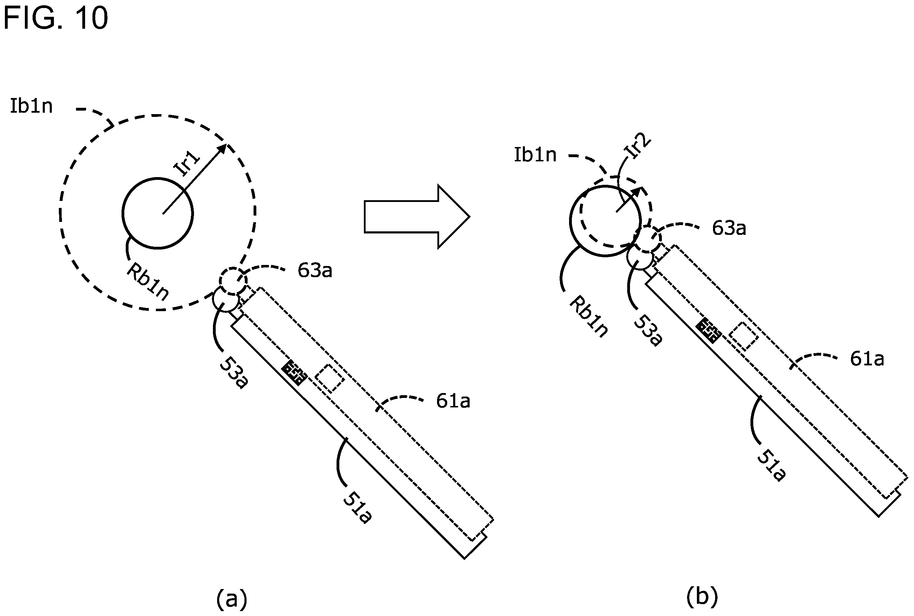

FIG. 10 depicts schematic diagrams illustrating an exemplary method for guiding the position of a measurement point in the method for measuring a dimension by using augmented reality according to the present invention. The dimension measurement system 100 has a function of allowing the operator to easily grasp measurement points related to a dimension measurement.

The method of FIG. 10 has the following two functions. The first one is a function of producing, as a large sphere, by the augmented reality server 97, a virtual measurement point (for example, Ib1n) corresponding to a real measurement point (for example, Rb1n) related to a dimension to be measured as illustrated in (a) of FIG. 10. The second one is a function of gradually reducing, as illustrated in (b) of FIG. 10, the size of the virtual measurement point (for example, Ib1n) displayed as a large sphere when contact between the virtual measurement point (for example, Ib1n) displayed as a large sphere and the virtual first probe 63a of the virtual long gauge 60 is detected. At this time, the radius of the virtual measurement point (for example, Ib1n) displayed as a sphere is gradually reduced from Ir1 ((a) of FIG. 10) to Ir2 ((b) of FIG. 10).

The operator 90 can easily recognize, in the augmented reality space, the real measurement point (for example, Rb1n) corresponding to the virtual measurement point (for example, Ib1n) displayed as a large and easy-to-find sphere. Moreover, when the first probe 53a of the long gauge 50 is brought closer to the virtual measurement point (for example, Ib1n) displayed as a large sphere and it is determined that the virtual first probe 63a is in contact with the virtual measurement point (for example, Ibln), the augmented reality server 97 gradually reduces the size of the displayed virtual measurement point (for example, Ib1n).

At this time, the operator 90 keeps the contact between the virtual first probe 63a and the virtual measurement point (for example, Ib1n) in the virtual space. That is, the operator 90 moves the first probe 53a in the real space corresponding to the virtual first probe 63a to follow the virtual measurement point (for example, Ib1n) being reduced in size. In this process, the real first probe 53a of the long gauge 50 held by the operator 90 is promptly guided to the real measurement point (for example, Rb1n).

### <Flowcharts>

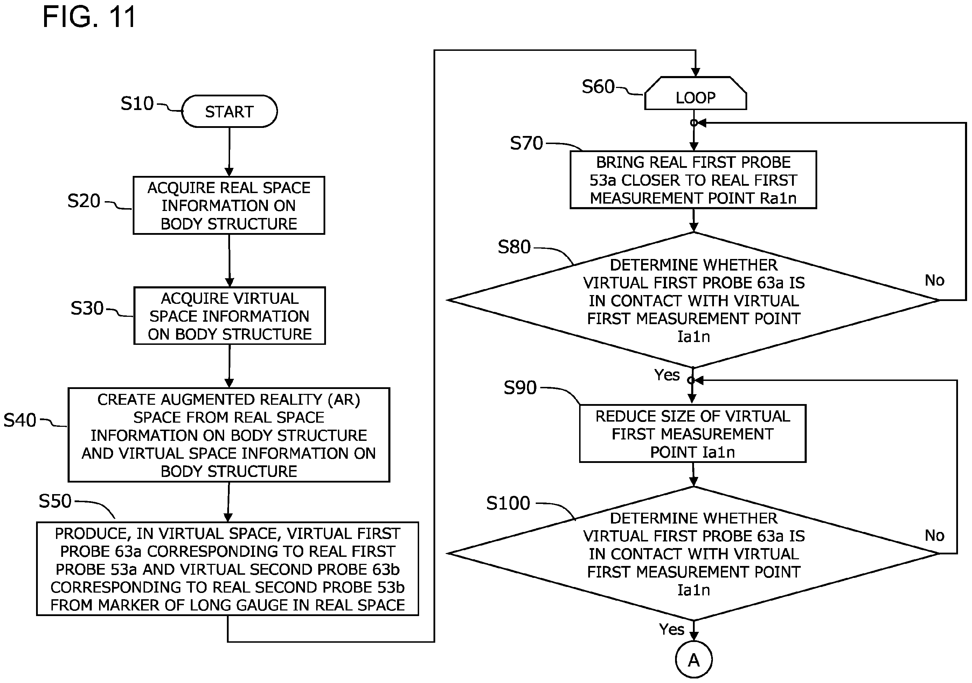

FIG. 11 to FIG. 14 are flowcharts illustrating an exemplary method for measuring a dimension by using augmented reality according to the present invention. FIG. 11 to FIG. 14 are flowcharts illustrating respective parts of the method, in which the portions with the same alphabets within the circles are connected to each other. With reference to FIG. 11 to FIG. 14, the exemplary method for measuring the dimensions of a railway vehicle body structure is described.

First, in Step S10 illustrated in FIG. 11, the measurement (method) of the dimensions of a railway vehicle body structure with use of augmented reality starts. Here, the operator 90 starts the measurement.

Next, in Step S20, the operator 90 activates the dimension measurement system 100 and wears the wearable device 92. The operator 90 visually recognizes, by the camera 93 of the wearable device 92, the body structure 1 whose dimensions are to be measured.

Next, in Step S30, information on the body structure 1 in a real space taken by the camera 93 is transferred to the augmented reality server 97. The augmented reality server 97 checks the transferred information on the body structure 1 in the real space against the library information stored in the network server 96 in advance. Then, the augmented reality server 97 acquires information on the body structure 1 in a virtual space corresponding to the information on the body structure 1 in the real space. The information on the body structure 1 in the virtual space is information based on 3D CAD data, for example.

Next, in Step S40, the augmented reality server 97 generates information on the body structure 1 in an augmented reality space having the information on the body structure 1 in the real space and the information on the body structure 1 in the virtual space superimposed thereon. The generated information on the body structure 1 in the augmented reality space is projected on the transparent screen 94 under the control of the augmented reality server 97.

Next, in Step S50, the augmented reality server 97 acquires the information on the first marker portion 52a of the long gauge 50 in the real space and generates, in the virtual space, the virtual first probe 63a corresponding to the first probe 53a corresponding to the acquired first marker portion 52a. Moreover, the augmented reality server 97 acquires the information on the second marker portion 52b of the long gauge 50 in the real space and generates, in the virtual space, the virtual second probe 63b corresponding to the second probe 53b corresponding to the acquired second marker portion 52b.

Next, the processing proceeds to Step S60. The dimension measurement-related operation in Step S60 to Step S170 is repeated until predetermined dimension measurements are finished.

Next, in Step S70, the operator 90 brings the real first probe 53a closer to the first measurement point Rain, which is one of measurement points. At this time, the augmented reality server 97 detects this (detects a state that the real first probe 53a is within a predetermined distance to the first measurement point Rain) and controls the transparent screen 94 to display, as a large sphere, the virtual first measurement point Ia1n corresponding to the real first measurement point Rain. The size at this time is a size sufficiently larger than that of the real first measurement point Rain such that the operator 90 can easily recognize the position of the measurement point.

Next, in Step S80, the augmented reality server 97 determines whether the virtual first probe 63a is in contact with the virtual first measurement point Ia1n displayed as a large sphere. When it is determined that there is contact, the processing proceeds to Step S90. When it is determined that there is no contact, the processing returns to Step S70 to prompt the operator 90 to perform the operation in Step S70. Specifically, the augmented reality server 97 controls the transparent screen 94 to provide a display that prompts the operator 90 to bring the real first probe 53a closer to the virtual first measurement point Ia1n, for example.

In Step S90, the augmented reality server 97 controls the display of the transparent screen 94 to gradually reduce the size of the virtual first measurement point Ia1n determined as having contact.

Next, in Step S100, the augmented reality server 97 determines whether the virtual first measurement point Ia1n reduced in size to a predetermined size is in contact with the virtual first probe 63a. The predetermined size here is a size that allows the real first probe 53a to be practically in contact with the real first measurement point Rain. When it is determined that there is contact, it is determined that the contact is complete, and the processing proceeds to Step S110. At this time, the transparent screen 94 may provide a display that notifies the operator 90 of the completion of the contact in question. When it is determined that there is no contact, the processing returns to Step S90.

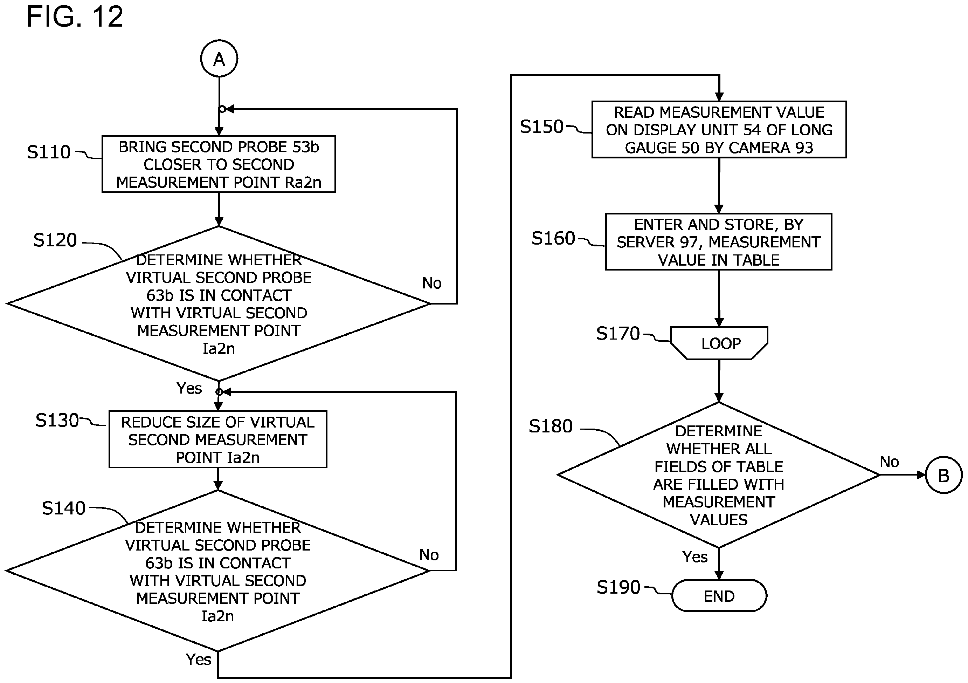

Next, as illustrated in FIG. 12, in Step S110, the operator 90 brings the real second probe 53b closer to the real second measurement point Ra2n (facing the real first measurement point Rain), which is the other measurement point. At this time, the augmented reality server 97 detects this (detects a state that the real second probe 53b is within a predetermined distance to the real second measurement point Ra2n) and controls the transparent screen 94 to display, as a large sphere, the virtual second measurement point Ia2n corresponding to the real second measurement point Ra2n. The size at this time is a size sufficiently larger than that of the real second measurement point Ra2n such that the operator 90 can easily recognize the position of the measurement point.

Next, in Step S120, the augmented reality server 97 determines whether the virtual second probe 63b is in contact with the virtual second measurement point Ia2n displayed as a large sphere. When it is determined that there is contact, the processing proceeds to Step S130. When it is determined that there is no contact, the processing returns to Step S110 to prompt the operator 90 to perform the operation in Step S110. Specifically, the augmented reality server 97 controls the transparent screen 94 to provide a display that prompts the operator 90 to bring the real second probe 53b closer to the virtual second measurement point Ia2n, for example.

In Step S130, the augmented reality server 97 controls the display of the transparent screen 94 to gradually reduce the size of the virtual second measurement point Ia2n determined as having contact.

Next, in Step S140, the augmented reality server 97 determines whether the virtual second measurement point Ia2n reduced in size to a predetermined size is in contact with the virtual second probe 63b. The predetermined size here is a size that allows the real second probe 53b to be practically in contact with the real second measurement point Ra2n. When it is determined that there is contact, it is determined that the contact is complete, and the processing proceeds to Step S150. At this time, the transparent screen 94 may provide a display that notifies the operator 90 of the completion of the contact in question. When it is determined that there is no contact, the processing returns to Step S130.

Next, in Step S150, the operator 90 reads a measurement value on the display unit 54 of the long gauge 50 by the camera 93. Here, the operator 90 captures the measurement value on the display unit 54 by the camera 93 to allow the augmented reality server 97 to automatically read the measurement value (for example, by image recognition).

Next, in Step S160, the augmented reality server 97 enters and stores the measurement value acquired in S150 in the table (see FIG. 9). Simultaneously, the augmented reality server 97 determines whether or not the measurement value falls within the range of the upper tolerance limit to the lower tolerance limit, thereby determining whether or not the measurement value is acceptable. The augmented reality server 97 enters and stores the result of the determination in the table.

Next, when proceeding to Step S170, the processing returns to Step S60. Then, the measurement of other measurement dimensions is performed. In this way, the respective steps from Step S60 to Step S170 are repeated for each measurement dimension as illustrated in FIG. 3.

Next, in Step S180, the augmented reality server 97 checks whether all the fields of the table for storing measurement values are filled with measurement values, thereby confirming that the dimensions to be measured have all been measured. When all the fields are filled with measurement values, the processing proceeds to Step S190. When some fields are not filled with measurement values, the processing proceeds to Step S200.

In Step S190, the augmented reality server 97 completes the measurement of the dimensions of the body structure 1.

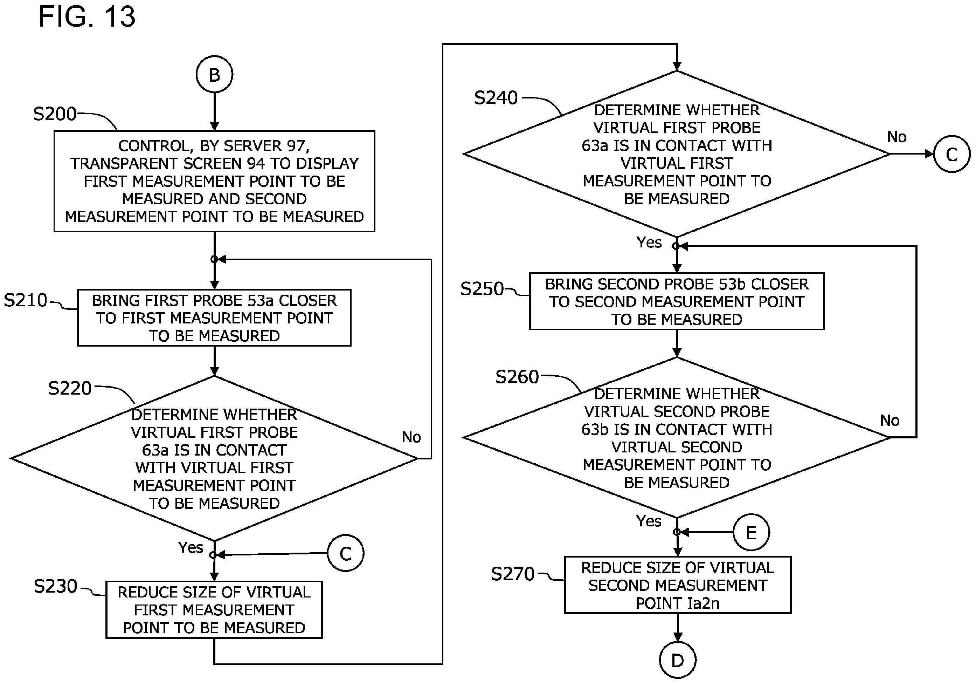

As illustrated in FIG. 13, in Step S200, the augmented reality server 97 controls the transparent screen 94 to display the positions of a first measurement point that is one of measurement points to be measured and a second measurement point that is the other measurement point to be measured. Here, the measurement points in question are displayed in a different color from the others or as large spheres, for example, thereby allowing the operator 90 to recognize the measurement points.

Next, in Step S210, the operator 90 brings the real first probe 53a into abutment against a virtual first measurement point that is to be measured and that is displayed on the transparent screen 94. At this time, as in Step S70, the virtual first measurement point can be displayed as a large sphere.

Next, in Step S220, the augmented reality server 97 determines whether the virtual first probe 63a is in contact with the virtual first measurement point that is to be measured and that is displayed as a large sphere. When it is determined that there is contact, the processing proceeds to Step S230. When it is determined that there is no contact, the processing returns to Step S210 to prompt the operator 90 to perform the operation in Step S210.

In Step S230, the augmented reality server 97 controls the display of the transparent screen 94 to gradually reduce the size of the displayed virtual first measurement point that is to be measured and that has been determined as having contact.

Next, in Step S240, the augmented reality server 97 determines whether the displayed virtual first measurement point that is to be measured and that has been reduced in size to a predetermined size is in contact with the virtual first probe 63a. When it is determined that there is contact, it is determined that the contact is complete, and the processing proceeds to Step S250. When it is determined that there is no contact, the processing returns to Step S230.

In Step S250, the operator 90 brings the real second probe 53b into abutment against a virtual second measurement point that is to be measured and that is displayed on the transparent screen 94. At this time, as described in Step S110, the virtual second measurement point can be displayed as a large sphere.

Next, in Step S260, the augmented reality server 97 determines whether the virtual second probe 63b is in contact with the virtual second measurement point that is to be measured and that is displayed as a large sphere. When it is determined that there is contact, the processing proceeds to Step S270. When it is determined that there is no contact, the processing returns to Step S250 to prompt the operator 90 to perform the operation in Step S110.

In Step S270, the augmented reality server 97 controls the display of the transparent screen 94 to gradually reduce the size of the virtual second measurement point to be measured.

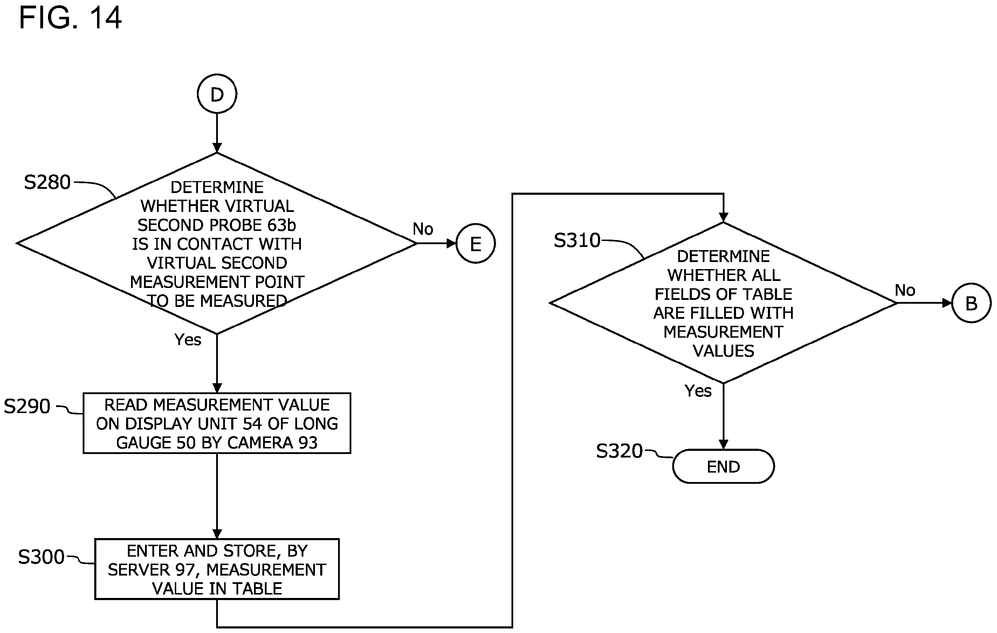

Next, as illustrated in FIG. 14, in Step S280, the augmented reality server 97 determines whether the displayed virtual second measurement point that is to be measured and that has been reduced in size to a predetermined size is in contact with the virtual second probe 63b. When it is determined that there is contact, it is determined that the contact is complete, and the processing proceeds to Step S290. When it is determined that there is no contact, the processing returns to Step S270.

In Step S290, the operator 90 reads a measurement value on the display unit 54 of the long gauge 50 by the camera 93. Here, the operator 90 captures the measurement value on the display unit 54 by the camera 93 to allow the augmented reality server 97 to automatically read the measurement value (for example, by image recognition).

Next, in Step S300, the augmented reality server 97 enters and stores the measurement value acquired in S290 in the table (see FIG. 9). Simultaneously, the augmented reality server 97 determines whether or not the measurement value falls within the range of the upper tolerance limit to the lower tolerance limit, thereby determining whether or not the measurement value is acceptable. The augmented reality server 97 enters and stores the result of the determination in the table.

Next, in Step S310, the augmented reality server 97 checks whether all the fields of the table for storing measurement values are filled with measurement values, thereby confirming that the dimensions to be measured have all been measured. When all the fields are filled with measurement values, the processing proceeds to Step S320, which is the next step. When some fields are not filled with measurement values, the processing returns to Step S200.

In Step S320, the augmented reality server 97 completes the measurement of the dimensions of the body structure 1.

### <Effects>

As described above, with the dimension measurement system using augmented reality, the operation of identifying each measurement cross section by referring to the design drawings and the operation of identifying the positions of measurement points in each measurement cross section can be omitted. With this, measurements can be performed by a reduced number of operators with a reduced number of man-hours. Moreover, the respective end portions of the long gauge held by a measurer who is to measure a dimension between two facing objects (surfaces) can be promptly guided to two measurement points provided on the inner surfaces of the body structure in advance. Moreover, the measurer is notified of the arrival of the respective end portions of the long gauge at the two measurement points, so that a more reliable measurement can be performed. Moreover, measurement data measured by the long gauge is stored in the server, and the management of data history is thus reliable, so that lack of measurement and measurement errors can be prevented, with the result that high traceability is achieved. Moreover, whether or not a measurement dimension is appropriate can be automatically determined.

Note that, the present invention is not limited to the above-mentioned embodiments and includes various modified examples. For example, the above-mentioned embodiments have been described in detail to provide an easy understanding of the present invention; however, the present invention is not necessarily limited to configurations including all the described constituent elements. Further, some constituent elements of a certain embodiment may be replaced by the constituent elements of other embodiments, or the constituent elements of a certain embodiment may be added to the constituent elements of other embodiments. Further, with regard to some constituent elements of each embodiment, the addition, omission, or replacement involving other constituent elements is possible.

### Description of Reference Symbols

1: Railway vehicle body structure
10: Underframe
20: Side body structure
22: Door
24: Window
30: End body structure
40: Roof body structure
50: Long gauge
51a: First gauge portion
51b: Second gauge portion
52a: First marker portion
52b: Second marker portion
53a: First probe
53b: Second probe
54: Display unit
60: Virtual long gauge
63a: Virtual first probe
63b: Virtual second probe
90: Operator
92: Wearable device
93: Camera
94: Transparent screen
95: Network
96: Network server
97: Augmented reality server
100: Dimension measurement system
300: Computer system
302: Processor
302A: Processing device
304: Memory
306: Memory bus
308: I/O bus
309: Bus interface unit
310: I/O bus interface unit
312: Terminal interface unit
314: Storage interface
316: I/O device interface
318: Network interface
320: User I/O device
324: Display system
326: Display device
330: Network
350: Latent factor identification application
   Rain, Rbin, Rein, Rh1n (n = A to K): Real first measurement point
   Ra2n, Rb2n, Rc2n, Rh2n (n = A to K): Real second measurement point
   Iain, Ib1n, 1c1n, Ihin (n = A to K): Virtual first measurement point
   Ia2n, Ib2n, Ic2n, Ih2n (n = A to K): Virtual second measurement point
x: Longitudinal direction of railway vehicle body structure 1
y: Width direction of railway vehicle body structure 1
z: Height direction of railway vehicle body structure 1

## Claims

1. A method for measuring a dimension by using an augmented reality space generated by superimposing a virtual space on a real space,
the augmented reality space being generated by processing a video taken by a camera by a processing unit and displaying the video on a transparent screen,
the dimension being measured by measuring a distance between one real measurement point and another real measurement point by using a gauge including a first probe that is brought into abutment against the one real measurement point and a second probe that is brought into abutment against the other real measurement point,
in the virtual space, one virtual measurement point corresponding to the one real measurement point, another virtual measurement point corresponding to the other real measurement point, a virtual first probe corresponding to the first probe in the real space, and a virtual second probe corresponding to the second probe in the real space being displayed,
the method comprising:
a first step of determining whether the virtual first probe is in contact with the one virtual measurement point; and
a second step of determining whether the virtual second probe is in contact with the other virtual measurement point.

2. The method for measuring a dimension by using an augmented reality space according to claim 1,
wherein the gauge includes
a first gauge portion including the first probe,
a first marker portion included in the first gauge portion,
a second gauge portion including the second probe, and
a second marker portion included in the second gauge portion, and,
in the virtual space, the virtual first probe is displayed based on information on the first marker portion, and the virtual second probe is displayed based on information on the second marker portion.

3. The method for measuring a dimension by using an augmented reality space according to claim 1,
wherein, when the one virtual measurement point is in contact with the virtual first probe, a size of the one virtual measurement point displayed is gradually reduced in the virtual space.

4. The method for measuring a dimension by using an augmented reality space according to claim 3,
wherein the first step includes determining, when the one virtual measurement point reduced in size to a predetermined size is in contact with the virtual first probe, that contact between the virtual first probe and the one virtual measurement point is complete.

5. The method for measuring a dimension by using an augmented reality space according to claim 1,
wherein, when the other virtual measurement point is in contact with the virtual second probe, a size of the other virtual measurement point displayed is gradually reduced in the virtual space.

6. The method for measuring a dimension by using an augmented reality space according to claim 5,
wherein the second step includes determining, when the other virtual measurement point reduced in size to a predetermined size is in contact with the virtual second probe, that contact between the virtual second probe and the other virtual measurement point is complete.

7. The method for measuring a dimension by using an augmented reality space according to claim 1,
wherein the gauge includes a display unit configured to display a dimension between the first probe and the second probe,
the method further comprising:
a third step of acquiring dimension data obtained by the gauge from the display unit through the camera, after it has been determined in the first step that the contact between the virtual first probe and the one virtual measurement point is complete and it has been determined in the second step that the contact between the virtual second probe and the other virtual measurement point is complete.

8. The method for measuring a dimension by using an augmented reality space according to claim 7, further comprising:
a fourth step of performing image processing and storing a resultant in a recording unit as a measurement value after the dimension data displayed on the display unit has been acquired by the camera in the third step.

9. The method for measuring a dimension by using an augmented reality space according to claim 1,
wherein the gauge includes a transmission unit configured to transmit a measurement result of a dimension between the first probe and the second probe, and
the method further comprising:
a third step of acquiring dimension data that is obtained by the gauge and is transmitted by the transmission unit, after it has been determined in the first step that the contact between the virtual first probe and the one virtual measurement point is complete and it has been determined in the second step that the contact between the virtual second probe and the other virtual measurement point is complete.
